# EUROPÄISCHE PATENTANMELDUNG

(11) **EP 1 876 196 A1**
(43) Veröffentlichungstag der Anmeldung: **09.01.2008**
(21) Anmeldenummer: 06116396.0
(22) Anmeldetag: 30.06.2006
(51) Int. Cl.: C08G 18/12, C08G 18/75, C08G 18/48, C09D 175/00

(54) **VOC-freie oder VOC-arme Polyurethanbeschichtung**

(71) Anmelder: Sika Technology AG, 6340 Baar (CH)
(72) Erfinder: Walther, Burkhard, 71634, Ludwigsburg (DE); Burckhardt, Urs, 8057, Zürich (CH); Strauss, Susanne, 70597, Stuttgart (DE); Zilg, Carsten, 70825, Korntal-Münchingen (DE); Blank, Norman, 8803, Rüschlikon (CH)

(57) **Zusammenfassung**

Die Erfindung betrifft feuchtigkeitshärtende Zusammensetzungen enthaltend mindestens ein Isocyanatgruppen aufweisendes Polyurethanpolymer P, mindestens ein Polyaldimin ALD der Formel (1) von mindestens 22 Gewichts-%, bezogen auf die Summe der Isocyanatgruppen-haltigen Bestandteile der Zusammensetzung, sowie gegebenenfalls ein oligomeres Polyisocyanat OP. Die feuchtigkeitshärtende Zusammensetzung eignet sich insbesondere für das Erstellen von Beschichtungen und Belägen. Aufgrund der Verwendung des Aldimins sind VOC-frei oder VOC-arme Zusammensetzungen ermöglicht, was von wesentlichem Vorteil für Innenanwendungen ist.

## Beschreibung

### Technisches Gebiet

Die vorliegende Erfindung betrifft das Gebiet der einkomponentigen feuchtigkeitshärtenden Polyurethanzusammensetzungen, sowie deren Verwendung, insbesondere als elastische Beschichtung.

### Stand der Technik

Einkomponentige feuchtigkeitshärtende Polyurethanzusammensetzungen und deren Verwendung als elastische Beschichtungen sind bekannt. Diese Zusammensetzungen basieren auf Isocyanatgruppen-haltigen Oligo- und/oder Polymeren und weisen eine relativ hohe Grundviskosität auf. Um trotzdem gute Verarbeitungseigenschaften, insbesondere eine hohe Fliessfähigkeit, zu erreichen, werden den Zusammensetzungen üblicherweise bedeutende Mengen von leichtflüchtigen organischen Lösemitteln zugesetzt, typischerweise zwischen 10 und 20 Gewichts-%. Damit die Zusammensetzungen blasenfrei aushärten, werden ihnen meist auch sogenannte ,,latente Härter" zugemischt; dies sind Substanzen, die erst bei Zutritt von Feuchtigkeit in einer Hydrolysereaktion den eigentlichen Härter, welcher meist Amin- und/oder Alkoholgruppen aufweist, freisetzen und darauf mit den Isocyanatgruppen ohne Bildung von Kohlendioxid-Gas reagieren. Viele dieser latenten Härter vermindern die Lagerstabilität der Zusammensetzungen und setzen bei der Aushärtungsreaktion leichtflüchtige, geruchsintensive Aldehyde, wie Isobutyraldehyd oder Benzaldehyd, frei. Die flächige Anwendung einer solchen Zusammensetzung als Beschichtung führt zur Freisetzung grosser Mengen an leichtflüchtigen organischen Verbindungen (VOC), was zu einer intensiven Geruchsbildung führt und Verarbeiter und/oder Anwohner stören und gesundheitlich belasten kann. Eine Anwendung in Innenräumen ist in den meisten Fällen nicht möglich. Die zunehmende Regulierung der Freisetzung von VOC schränkt die Verwendung solcher Zusammensetzungen zusätzlich ein und verteuert sie. Eine Reduktion des VOC-Gehalts, beispielsweise mittels Ersatz von leichtflüchtigen durch schwererflüchtige Lösemittel oder durch Weichmacher, führt in der Regel zu Beschichtungen mit ungenügenden Eigenschaften, insbesondere in Bezug auf Festigkeit oder Beständigkeit.

Bisherige VOC-arme oder -freie Polyurethan-Beschichtungen sind deshalb in aller Regel zweikomponentig. Durch ihren vergleichsweise hohen Gehalt an monomeren oder oligomeren, vergleichsweise niedermolekularen, Reaktivkomponenten weisen sie eine deutlich niedrigere Viskosität auf und sind deshalb auch ohne VOC-Zusatz gut verarbeitbar. Allerdings setzt das zweikomponentige System voraus, dass die Mischung der beiden Komponenten vollständig erfolgt und das Mischungsverhältnis sowie die Topfzeit korrekt eingehalten werden; anderenfalls wird eine inhomogene, unsauber durchhärtende, mechanisch ungenügende oder unbeständige Beschichtung erhalten. Die Einhaltung dieser Bedingungen ist in der Praxis oft problematisch, weshalb einkomponentige Systeme vom Verarbeiter bevorzugt werden.

WO 2004/013200 A1 offenbart einkomponentige, geruchsfrei aushärtende Polyurethanzusammensetzungen enthaltend spezielle geruchsfreie Polyaldimine. Diese Zusammensetzungen weisen eine hohe Grundviskosität auf.

### Darstellung der Erfindung

Aufgabe der vorliegenden Erfindung ist es daher, eine als elastische Polyurethanbeschichtung einsetzbare, VOC-freie oder VOC-arme einkomponentige Zusammensetzung zur Verfügung zu stellen, welche eine gute Lagerstabilität aufweist und niedrigviskos genug ist, um gute Verarbeitungseigenschaften aufzuweisen, unter dem Einfluss von Feuchtigkeit ohne störenden Geruch aushärtet und im ausgehärteten Zustand über eine genügend hohe Härte bei guter Elastizität verfügt.

Es wurde gefunden, dass eine Zusammensetzung nach Anspruch 1 die gewünschten Eigenschaften aufweist.

Überraschenderweise wird die Zusammensetzung durch den hohen Gehalt an speziellen geruchsfreien Polyaldiminen so stark verdünnt, dass sie auch ohne weitere verdünnende Zusätze, wie leichtflüchtige organische Lösemittel, gute Verarbeitungseigenschaften, insbesondere eine hohe Fliessfähigkeit, besitzt und sich hervorragend für die Anwendung als elastische Polyurethanbeschichtung, insbesondere als Bodenbelag, eignet.

### Wege zur Ausführung der Erfindung

Gegenstand der vorliegenden Erfindung ist eine feuchtigkeitshärtende Zusammensetzung umfassend
a) mindestens ein Isocyanatgruppen aufweisendes Polyurethanpolymer P,
b) mindestens ein Polyaldimin ALD der Formel (1), und 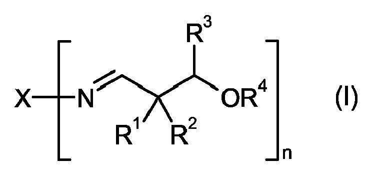
c) gegebenenfalls ein oligomeres Polyisocyanat OP.

In Formel (I) steht X für den organischen Rest eines n-funktionellen Polyamins mit einem Molekulargewicht von höchstens 300 g/mol nach Entfernung aller NH₂-Gruppen, wobei dieser organische Rest keine Gruppierungen aufweist, die in Abwesenheit von Wasser mit Isocyanatgruppen reaktionsfähig sind, insbesondere keine Hydroxylgruppen, keine sekundären Aminogruppen, keine Harnstoffgruppen und keine anderen Gruppen mit aktivem Wasserstoff.
n steht für 2 oder 3 oder 4.
- R¹ und R²: stehen unabhängig voneinander entweder jeweils für einen einwertigen Kohlenwasserstoffrest mit 1 bis 12 C-Atomen, oder zusammen für einen zweiwertigen Kohlenwasserstoffrest mit 4 bis 20 C-Atomen, der Teil eines, gegebenenfalls substituierten, carbocyclischen Rings mit 5 bis 8, bevorzugt 6, C-Atomen, ist.
- R³: steht für ein Wasserstoffatom oder für eine Alkyl- oder Arylalkylgruppe.
- R⁴: steht entweder für einen, gegebenenfalls Heteroatome enthaltenden, Kohlenwasserstoffrest mit 11 bis 30 C-Atomen, der gegebenenfalls Heteroatome enthält,
oder für einen Rest der Formel (II), 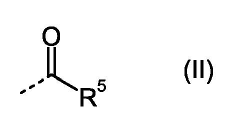 wobei R⁵
entweder für einen linearen oder verzweigten Alkylrest mit 11 bis 30 C-Atomen, gegebenenfalls mit cyclischen Anteilen und gegebenenfalls mit mindestens einem Heteroatom, insbesondere Sauerstoff in Form von Ether-, Ester- oder Aldehyd-Gruppen, steht,
oder für einen einfach oder mehrfach ungesättigten, linearen oder verzweigten Kohlenwasserstoffrest mit 11 bis 30 C-Atomen steht, oder für einen, gegebenenfalls substituierten, aromatischen oder heteroaromatischen, 5- oder 6-gliedrigen Ring steht.

Der Anteil des Polyaldimins **ALD** beträgt mindestens 22 Gewichts-%, bevorzugt mindestens 25 Gewichts-%, besonders bevorzugt mindestens 30 Gewichts-%, bezogen auf die Summe der Isocyanatgruppen-haltigen Bestandteile der Zusammensetzung.

Die feuchtigkeitshärtende Zusammensetzung ist insbesondere geeignet als VOC-freie oder VOC-arme, geruchsfrei aushärtende, selbstverlaufende elastische Beschichtung, vorzugsweise für Böden.

Der Begriff "Polymer" umfasst im vorliegenden Dokument einerseits ein Kollektiv von chemisch einheitlichen, sich aber in Bezug auf Polymerisationsgrad, Molmasse und Kettenlänge unterscheidenden Makromolekülen, das durch eine Polyreaktion (Polymerisation, Polyaddition, Polykondensation) hergestellt wurde. Der Begriff umfasst andererseits auch Derivate eines solchen Kollektivs von Makromolekülen aus Polyreaktionen, Verbindungen also, die durch Umsetzungen, wie beispielsweise Additionen oder Substitutionen, von funktionellen Gruppen an vorgegebenen Makromolekülen erhalten wurden und die chemisch einheitlich oder chemisch uneinheitlich sein können. Der Begriff umfasst im Weiteren auch sogenannte Prepolymere, das heisst reaktive oligomere Voraddukte, deren funktionelle Gruppen am Aufbau von Makromolekülen beteiligt sind.

Der Begriff "Polyurethanpolymer" umfasst sämtliche Polymere, welche nach dem sogenannten Diisocyanat-Polyadditions-Verfahren hergestellt werden. Dies schliesst auch solche Polymere ein, die nahezu oder gänzlich frei sind von Urethangruppen. Beispiele für Polyurethanpolymere sind Polyether-Polyurethane, Polyester-Polyurethane, Polyether-Polyharnstoffe, Polyharnstoffe, Polyester-Polyharnstoffe, Polyisocyanurate und Polycarbodiimide.

Der Begriff "Polyamin" bezeichnet hier und im Folgenden aliphatische primäre Polyamine, das heisst Polyamine mit ausschliesslich primären Aminogruppen (NH₂-Gruppen), die an einen aliphatischen, cycloaliphatischen oder arylaliphatischen Rest, der gegebenenfalls Heteroatome enthält, gebunden sind. Sie unterscheiden sich damit von den aromatischen primären Polyaminen, die an einen aromatischen oder heteroaromatischen Rest gebundene NH₂-Gruppen enthalten, wie beispielsweise in Diaminotoluol.

Der Begriff ,,leichtflüchtige organische Verbindung", kurz "VOC" (,,Volatile Organic Compounds"), steht für eine Verbindung mit einem Dampfdruck von mindestens 0.01 Kilopascal bei 293.15 Kelvin.

Der Begriff "Lösemittel" steht für eine flüssige, leichtflüchtige organische Verbindung, also für ein VOC, in welcher ein Isocyanatgruppen enthaltendes Polyurethanpolymer löslich ist, und welche keine mit Isocyanatgruppen reaktive Gruppen enthält, insbesondere keine Hydroxylgruppen, Aminogruppen, Harnstoffgruppen oder andere Gruppen mit aktivem Wasserstoff.

Die Begriffe "Beschichtung" und "Belag" werden für härtbare Polymerzusammensetzungen verwendet, welche flächig und in einer Schichtdicke von mindestens 0.1, insbesondere 0.5 mm, bevorzugt 1 - 2 mm, appliziert wurden.

Die feuchtigkeitshärtende Zusammensetzung enthält mindestens ein Isocyanatgruppen aufweisendes Polyurethanpolymer **P**.

Das Polyurethanpolymer **P** ist beispielsweise erhältlich aus der Umsetzung von mindestens einem Polyol mit mindestens einem Polyisocyanat. Diese Umsetzung kann dadurch erfolgen, dass das Polyol und das Polyisocyanat mit üblichen Verfahren, beispielsweise bei Temperaturen von 50 °C bis 100 °C, gegebenenfalls unter Mitverwendung geeigneter Katalysatoren, zur Reaktion gebracht werden, wobei das Polyisocyanat so dosiert ist, dass dessen Isocyanatgruppen im Verhältnis zu den Hydroxylgruppen des Polyols im stöchiometrischen Überschuss vorhanden sind. Vorteilhaft ist das Polyisocyanat so dosiert, dass ein NCO/OH-Verhältnis von 1.5 bis 5, insbesondere eines von 1.8 bis 3, eingehalten wird. Unter dem NCO/OH-Verhältnis wird hierbei das Verhältnis der Anzahl der eingesetzten Isocyanatgruppen zu der Anzahl der eingesetzten Hydroxylgruppen verstanden. Bevorzugt verbleibt im Polyurethanpolymer **P** nach der Umsetzung aller Hydroxylgruppen des Polyols ein Gehalt an freien Isocyanatgruppen von 0.5 bis 15 Gewichts-%, besonders bevorzugt von 3.5 bis 10 Gewichts-%.

Als Polyole für die Herstellung eines Polyurethanpolymers **P** können beispielsweise die folgenden handelsüblichen Polyole oder Mischungen davon eingesetzt werden:
- Polyoxyalkylenpolyole, auch Polyetherpolyole oder Oligoetherole genannt, welche Polymerisationsprodukte von Ethylenoxid, 1,2-Propylenoxid, 1,2- oder 2,3-Butylenoxid, Tetrahydrofuran oder Mischungen davon sind, eventuell polymerisiert mit Hilfe eines Startermoleküls mit zwei oder mehreren aktiven Wasserstoffatomen wie beispielsweise Wasser, Ammoniak oder Verbindungen mit mehreren OH- oder NH-Gruppen wie beispielsweise 1,2-Ethandiol, 1,2- und 1,3-Propandiol, Neopentylglykol, Diethylenglykol, Triethylenglykol, die isomeren Dipropylenglykole und Tripropylenglykole, die isomeren Butandiole, Pentandiole, Hexandiole, Heptandiole, Octandiole, Nonandiole, Decandiole, Undecandiole, 1,3- und 1,4-Cyclohexandimethanol, Bisphenol A, hydriertes Bisphenol A, 1,1,1-Trimethylolethan, 1,1,1-Trimethylolpropan, Glycerin, Anilin, sowie Mischungen der vorgenannten Verbindungen. Eingesetzt werden können sowohl Polyoxyalkylenpolyole, die einen niedrigen Ungesättigtheitsgrad aufweisen (gemessen nach ASTM D-2849-69 und angegeben in Milliequivalent Ungesättigtheit pro Gramm Polyol (mEq/g)), hergestellt beispielsweise mit Hilfe von sogenannten Double Metal Cyanide Complex-Katalysatoren (DMC-Katalysatoren), als auch Polyoxyalkylenpolyole mit einem höheren Ungesättigtheitsgrad, hergestellt beispielsweise mit Hilfe von anionischen Katalysatoren wie NaOH, KOH, CsOH oder Alkalialkoholaten.
   Besonders geeignet sind Polyoxyalkylendiole oder Polyoxyalkylentriole, insbesondere Polyoxypropylendiole oder Polyoxypropylentriole.
   Speziell geeignet sind Polyoxyalkylendiole oder Polyoxyalkylentriole mit einer tiefen Viskosität und mit einem Molekulargewicht im Bereich von 400 - 8'000 g/mol.
   Ebenfalls besonders geeignet sind Polytetrahydrofurane aufgrund ihrer guten Lichstabilität.
   Ebenfalls besonders geeignet sind sogenannte Ethylenoxidterminierte ("EO-endcapped", ethylene oxide-endcapped) Polyoxypropylenpolyole. Letztere sind spezielle Polyoxypropylenpolyoxyethylenpolyole, die beispielsweise dadurch erhalten werden, dass reine Polyoxypropylenpolyole, insbesondere Polyoxypropylendiole und -triole, nach Abschluss der Polypropoxylierungsreaktion mit Ethylenoxid weiter alkoxyliert werden und dadurch primäre Hydroxylgruppen aufweisen.
- Styrol-Acrylnitril- oder Acrylnitril-Methylmethacrylat-gepfropfte Polyetherpolyole.
- Polyesterpolyole, auch Oligoesterole genannt, hergestellt beispielsweise aus zwei- bis dreiwertigen Alkoholen wie beispielsweise 1,2-Ethandiol, Diethylenglykol, 1,2-Propandiol, Dipropylenglykol, 1,4-Butandiol, 1,5-Pentandiol, 1,6-Hexandiol, Neopentylglykol, Glycerin, 1,1,1-Trimethylolpropan oder Mischungen der vorgenannten Alkohole mit organischen Dicarbonsäuren oder deren Anhydride oder Ester wie beispielsweise Bernsteinsäure, Glutarsäure, Adipinsäure, Korksäure, Sebacinsäure, Dodecandicarbonsäure, Maleinsäure, Fumarsäure, Phthalsäure, Isophthalsäure, Terephthalsäure und Hexahydrophthalsäure oder Mischungen der vorgenannten Säuren, sowie Polyesterpolyole aus Lactonen wie beispielsweise ε-Caprolacton.
- Polycarbonatpolyole, wie sie durch Umsetzung beispielsweise der oben genannten - zum Aufbau der Polyesterpolyole eingesetzten - Alkohole mit Dialkylcarbonaten, Diarylcarbonaten oder Phosgen zugänglich sind.
- Polyacrylat- und Polymethacrylatpolyole.
- Polykohlenwasserstoffpolyole, auch Oligohydrocarbonole genannt, wie beispielsweise polyhydroxyfunktionelle Ethylen-Propylen-, Ethylen-Butylen- oder Ethylen-Propylen-Dien-Copolymere, wie sie beispielsweise von der Firma Kraton Polymers hergestellt werden, oder polyhydroxyfunktionelle Copolymere aus Dienen wie 1,3-Butandien oder Diengemischen und Vinylmonomeren wie Styrol, Acrylnitril oder Isobutylen, oder polyhydroxyfunktionelle Polybutadienpolyole, wie beispielsweise solche, die durch Copolymerisation von 1,3-Butadien und Allylalkohol hergestellt werden und auch hydriert sein können.
- Polyhydroxyfunktionelle Acrylonitril/Polybutadien-Copolymere, wie sie beispielsweise aus Epoxiden oder Aminoalkoholen und carboxylterminierten Acrylonitril/Polybutadien-Copolymeren (kommerziell erhältlich unter dem Namen Hycar^{®} CTBN von Noveon) hergestellt werden können.

Diese genannten Polyole weisen bevorzugt ein mittleres Molekulargewicht von 250 - 12'000 g/mol, insbesondere von 400 - 8'000 g/mol, und eine mittlere OH-Funktionalität im Bereich von 1.7 bis 3 auf.

Zusätzlich zu diesen genannten Polyolen können kleine Mengen von niedrigmolekularen zwei- oder mehrwertigen Alkoholen wie beispielsweise 1,2-Ethandiol, 1,3- und 1,4-Butandiol, 1,2- und 1,3-Propandiol, Neopentylglykol, Diethylenglykol, Triethylenglykol, die isomeren Dipropylenglykole und Tripropylenglykole, die isomeren Pentandiole, Hexandiole, Heptandiole, Octandiole, Nonandiole, Decandiole, Undecandiole, 1,3- und 1,4-Cyclohexandimethanol, hydriertes Bisphenol A, dimere Fettalkohole, 1,1,1-Trimethylolethan, 1,1,1-Trimethylolpropan, Glycerin, Pentaerythrit, Zuckeralkohole wie Xylit, Sorbit oder Mannit, Zucker wie Saccharose, andere höherwertige Alkohole, niedrigmolekulare Alkoxylierungsprodukte der vorgenannten zwei- und mehrwertigen Alkohole, sowie Mischungen der vorgenannten Alkohole bei der Herstellung eines Polyurethanpolymers **P** mitverwendet werden. Ebenso können kleine Mengen an Polyolen mit einer mittleren OH-Funktionalität von mehr als 3 mitverwendet werden, beispielsweise Zuckerpolyole.

Als Polyisocyanate für die Herstellung eines Polyurethanpolymers **P** können handelsübliche aliphatische, cycloaliphatische oder aromatische Polyisocyanate, insbesondere Diisocyanate, verwendet werden, beispielsweise die folgenden:

Diisocyanate mit an jeweils ein aliphatisches, cycloaliphatisches oder araliphatisches C-Atom gebundenen Isocyanatgruppen, auch "aliphatische Diisocyanate" genannt, wie 1,6-Hexamethylendiisocyanat (HDI), 2-Methylpentamethylen-1,5-diisocyanat, 2,2,4- und 2,4,4-Trimethyl-1,6-hexamethylendiisocyanat (TMDI), 1,12-Dodecamethylendiisocyanat, Lysin- und Lysinesterdiisocyanat, Cyclohexan-1,3- und -1,4-diisocyanat und beliebige Gemische dieser Isomeren, 1-Isocyanato-3,3,5-trimethyl-5-isocyanatomethyl-cyclohexan (=Isophorondiisocyanat oder IPDI), Perhydro-2,4'- und -4,4'-diphenylmethandiisocyanat (HMDI), 1,4-Diisocyanato-2,2,6-trimethylcydohexan (TMCDI), 1,3- und 1,4-Bis-(isocyanatomethyl)-cyclohexan, m- und p-Xylylendiisocyanat (mund p-XDI), m- und p-Tetramethyl-1,3- und -1,4-xylylendiisocyanat (m- und p-TMXDI), Bis-(1-lsocyanato-1-methylethyl)-naphthalin; sowie Diisocyanate mit an jeweils ein aromatisches C-Atom gebundenen Isocyanatgruppen, auch "aromatische Diisocyanate" genannt, wie 2,4- und 2,6-Toluylendiisocyanat und beliebige Gemische dieser Isomeren (TDI), 4,4'-, 2,4'- und 2,2'-Diphenylmethandiisocyanat und beliebige Gemische dieser Isomeren (MDI), 1,3- und 1,4-Phenylendiisocyanat, 2,3,5,6- Tetramethyl-1 ,4-diisocyanatobenzol, Naphthalin-1,5-diisocyanat (NDI), 3,3'-Dimethyl-4,4'-diisocyanatodiphenyl (TODI); Oligomere und Polymere der vorgenannten Isocyanate, sowie beliebige Mischungen der vorgenannten Isocyanate.

Für das Formulieren von lichtstabilen Beschichtungen sind aliphatische Diisocyanate bevorzugt, insbesondere HDI und IPDI.

Von den aromatischen Diisocyanaten bevorzugt sind MDI und TDI.

Die Polyole und Polyisocyanate werden so gewählt, dass ein daraus gebildetes Polyurethanpolymer **P** eine niedrige Viskosität aufweist. Ein niedrigviskoses Polyurethanpolymer **P** ist besonders gut geeignet, um Beschichtungen mit hoher Fliessfähigkeit zu erhalten. Als "niedrige Viskosität" wird hierbei eine Viskosität von höchstens 25 Pa·s, insbesondere von höchstsens 20 Pa·s, bevorzugt höchstens 15 Pa·s, bei 20°C bezeichnet.

Üblicherweise ist das Polyurethanpolymer **P** in einer Menge von 10 - 80 Gewichts-%, bevorzugt in einer Menge von 15 - 70 Gewichts-%, bezogen auf die gesamte Zusammensetzung, vorhanden.

Die feuchtigkeitshärtende Zusammensetzung enthält neben dem Polyurethanpolymer **P** mindestens ein Polyaldimin **ALD** der Formel (1) in einer Menge von mindestens 22 Gewichts-%, bevorzugt mindestens 25 Gewichts-%, besonders bevorzugt mindestens 30 Gewichts-%, bezogen auf die Gewichtsumme aller Isocyanatgruppen-haltigen Bestandteile der Zusammensetzung.

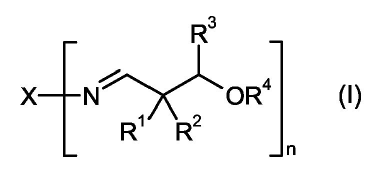

In Formel (I) steht X für den organischen Rest eines n-funktionellen Polyamins mit einem Molekulargewicht von höchstens 300 g/mol nach Entfernung aller NH₂-Gruppen, wobei dieser organische Rest keine Gruppierungen aufweist, die in Abwesenheit von Wasser mit Isocyanatgruppen reaktionsfähig sind, insbesondere keine Hydroxylgruppen, keine sekundären Aminogruppen, keine Harnstoffgruppen und keine anderen Gruppen mit aktivem Wasserstoff.

Bevorzugt steht X für einen Kohlenwasserstoffrest, welcher gegebenenfalls substituiert ist, und welcher gegebenenfalls Heteroatome enthält, insbesondere in Form von Ether-Sauerstoff, tertiärem Amin-Stickstoff oder Thioether-Schwefel.

n steht für 2 oder 3 oder 4, bevorzugt für 2 oder 3, besonders bevorzugt für 2.

R¹ und R² stehen unabhängig voneinander einerseits jeweils für einen einwertigen Kohlenwasserstoffrest mit 1 bis 12 C-Atomen.

Andererseits können R¹ und R² zusammen für einen zweiwertigen Kohlenwasserstoffrest mit 4 bis 20 C-Atomen stehen, der Teil eines, gegebenenfalls substituierten, carbocyclischen Rings mit 5 bis 8, bevorzugt 6, C-Atomen ist.

R³ steht für ein Wasserstoffatom oder für eine Alkyl- oder Arylalkylgruppe. Bevorzugt steht R³ für ein Wasserstoffatom.

R⁴ steht entweder für einen, gegebenenfalls Heteroatome enthaltenden, Kohlenwasserstoffrest mit 11 bis 30 C-Atomen,
oder für einen Rest der Formel (II), 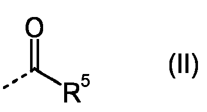 wobei für den Rest R⁵ drei Möglichkeiten bestehen.

Einerseits kann R⁵ für einen linearen oder verzweigten Alkylrest mit 11 bis 30 C-Atomen stehen, gegebenenfalls mit cyclischen Anteilen, und gegebenenfalls mit mindestens einem Heteroatom, insbesondere Sauerstoff in Form von Ether-, Ester- oder Aldehyd-Gruppen.

Andererseits kann R⁵ für einen einfach oder mehrfach ungesättigten, linearen oder verzweigten Kohlenwasserstoffrest mit 11 bis 30 C-Atomen stehen.

Des weiteren kann R⁵ für einen, gegebenenfalls substituierten, aromatischen oder heteroaromatischen, 5- oder 6-gliedrigen Ring stehen.

Ein Polyaldimin **ALD** ist erhältlich durch eine Kondensationsreaktion unter Abspaltung von Wasser zwischen einem Polyamin der Formel (111) und einem Aldehyd der Formel (IV), wobei X, n und R¹, R², R³ und R⁴ die vorgängig genannten Bedeutungen aufweisen. Der Aldehyd der Formel (IV) wird hierbei in Bezug auf die Aminogruppen des Polyamins der Formel (III) stöchiometrisch oder im stöchiometrischen Überschuss eingesetzt.

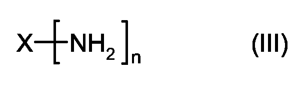

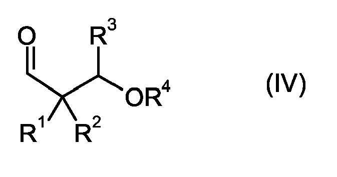

Polyamine der Formel (III) sind Polyamine mit zwei, drei oder vier aliphatischen primären Aminogruppen und einem Molekulargewicht, gegebenenfalls einem mittleren Molekulargewicht, von höchstens 300 g/mol, bevorzugt höchstens 250 g/mol, besonders bevorzugt höchstens 200 g/mol. Der Rest X weist keine Gruppierungen auf, die in Abwesenheit von Wasser mit Isocyanatgruppen reaktionsfähig sind; insbesondere weist X keine Hydroxylgruppen, keine sekundären Aminogruppen, keine Harnstoffgruppen und keine anderen Gruppen mit aktivem Wasserstoff auf.

Eine elastische Beschichtung, insbesondere ein Bodenbelag, von guter Qualität muss im ausgehärteten Zustand eine relativ hohe Härte aufweisen. Durch den Einsatz von eher kleinen Polyaminen der Formel (III) mit einem Molekulargewicht von höchstens 300 g/mol, bevorzugt höchstens 250 g/mol, besonders bevorzugt höchstens 200 g/mol, entstehen bei der Aushärtung der Zusammensetzung Hartsegmente mit nahe zueinander stehenden Harnstoffgruppen, was bei niedriger Dehnung ein relativ hohes Elastizitätsmodul und damit eine relativ hohe Härte zur Folge hat. Beim Einsatz von Polyaminen mit einem höheren Molekulargewicht als 300 g/mol wird die für Bodenbeschichtungen gewünschte hohe Härte üblicherweise nicht erreicht. Zur Erreichung einer hohen Härte besonders geeignete Polyamine sind cycloaliphatische Diamine, sowie aliphatische Diamine mit einer unsubstituierten, geradzahligen Alkylenkette zwischen den Aminogruppen.

Geeignete Polyamine der Formel (III) sind beispielsweise aliphatische Polyamine wie Ethylendiamin, 1,2- und 1,3-Propandiamin, 2-Methyl-1,2-propandiamin, 2,2-Dimethyl-1,3-propandiamin, 1,3- und 1,4-Butandiamin, 1,3- und 1,5-Pentandiamin, 1,6-Hexamethylendiamin, 2,2,4- und 2,4,4-Trimethylhexamethylendiamin und Mischungen davon, 1,7-Heptandiamin, 1,8-Octandiamin, 4-Aminomethyl-1,8-octandiamin, 1,9-Nonandiamin, 1,10-Decandiamin, 1,11-Undecandiamin, 1,12-Dodecandiamin, Methyl-bis-(3-aminopropyl)amin, 1,5-Diamino-2-methylpentan (MPMD), 1,3-Diaminopentan (DAMP), 2,5-Dimethyl-1,6-hexamethylendiamin, cycloaliphatische Polyamine wie 1,3- und 1,4-Diaminocyclohexan, Bis-(4-aminocyclohexyl)-methan, Bis-(4-amino-3-methylcyclohexyl)-methan, Bis-(4-amino-3-ethylcyclohexyl)-methan, Bis-(4-amino-3,5-dimethylcyclohexyl)-methan, 1-Amino-3-aminomethyl-3,5,5-trimethylcyclohexan (= Isophorondiamin oder IPDA), 2- und 4-Methyl-1,3-diaminocyclohexan und Mischungen davon, 1,3- und 1,4-Bis-(aminomethyl)-cyclohexan, 1-Cyclohexylamino-3-aminopropan, 2,5(2,6)-Bis-(aminomethyl)-bicyclo[2.2.1]heptan (NBDA), 3(4),8(9)-Bis-(aminomethyl)-tricyclo-[5.2.1.0^{2,6}]decan, 1,4-Diamino-2,2,6-trimethylcyclohexan (TMCDA), 3,9-Bis-(3-aminopropyl)-2,4,8,10-tetraoxaspiro[5.5]undecan, 1,3- und 1,4-Xylylendiamin, Ethergruppen-haltige aliphatische Polyamine wie Bis-(2-aminoethyl)ether, 4,7-Dioxadecan-1,10-diamin, 4,9-Dioxadodecan-1,12-diamin, Polyoxyalkylen-Polyamine mit theoretisch zwei oder drei Aminogruppen, beispielsweise Jeffamine® D-230, Jeffamine® XTJ-504 (Triethylenglykoldiamin) und Jeffamine® XTJ-511 (alle drei von Huntsman Chemicals). Die Polyoxyalkylen-Polyamine mit theoretisch zwei oder drei Aminogruppen sind kurzkettig und weisen dadurch ein Molekulargewicht von weniger als höchstens 300g/mol auf.

Als Polyamine der Formel (111) bevorzugt sind 1,6-Hexamethylendiamin, MPMD, DAMP, IPDA, 4-Aminomethyl-1,8-octandiamin, 1,3-Xylylendiamin, 1,3-Bis-(aminomethyl)cyclohexan, Bis-(4-aminocyclohexyl)-methan, Bis-(4-amino-3-methylcyclohexyl)-methan, 3(4),8(9)-Bis-(aminomethyl)-tricyclo-[5.2.1.0^{2,6}]decan, 1,4-Diamino-2,2,6-trimethylcyclohexan sowie die kurzkettigen Polyoxyalkylen-Diamine Jeffamine® D-230 (CAS-Nr. 9046-10-0) und Jeffamine® XTJ-504 (CAS-Nr. 929-59-9), sowie insbesondere Mischungen von zwei oder mehr der vorgenannten Polyamine.

Besonders bevorzugt ist 1,6-Hexamethylendiamin.

Zur Herstellung eines Polyaldimins **ALD** werden Aldehyde der Formel (IV) verwendet. Diese Aldehyde haben die Eigenschaft, dass ihre Reste R¹, R², R³ und R⁴ keine Gruppierungen aufweisen, die in Abwesenheit von Wasser mit Isocyanatgruppen reaktionsfähig sind; insbesondere weisen R¹, R², R³ und R⁴ keine Hydroxylgruppen, sekundäre Aminogruppen, Harnstoffgruppen oder andere Gruppen mit aktivem Wasserstoff auf.

Geeignete Aldehyde der Formel (IV) sind in einer ersten Ausführungsform Aldehyde, welche als Rest R⁴ einen, gegebenenfalls Heteroatome enthaltenden, Kohlenwasserstoffrest mit 11 bis 30 C-Atomen tragen. Sie stellen Ether von aliphatischen, araliphatischen oder cycloaliphatischen 2,2-disubstituierten 3-Hydroxyaldehyden mit langkettigen Alkoholen, wie beispielsweise Fettalkoholen, dar. Geeignete 2,2-disubstituierte 3-Hydroxyaldehyde sind ihrerseits erhältlich aus Aldol-Reaktionen, insbesondere gekreuzten Aldol-Reaktionen, zwischen primären oder sekundären aliphatischen Aldehyden, insbesondere Formaldehyd, und sekundären aliphatischen, sekundären araliphatischen oder sekundären cycloaliphatischen Aldehyden, wie beispielsweise 2-Methylbutyraldehyd, 2-Ethylbutyraldehyd, 2-Methylvaleraldehyd, 2-Ethylcapronaldehyd, Cyclopentancarboxaldehyd, Cyclohexancarboxaldehyd, 1,2,3,6-Tetrahydrobenzaldehyd, 2-Methyl-3-phenylpropionaldehyd, 2-Phenylpropionaldehyd (Hydratropaldehyd) oder Diphenylacetaldehyd. Als Beispiele genannt werden sollen 2,2-Dimethyl-3-lauroxy-propanal und 2,2-Dimethyl-3-stearoxy-propanal.

In einer zweiten Ausführungsform sind geeignete Aldehyde der Formel (IV) Verbindungen der Formel (V), 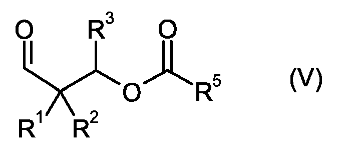 wobei R¹, R², R³ und R⁵ die bereits genannten Bedeutungen aufweisen.

Verbindungen der Formel (V) stellen Ester der bereits beschriebenen 2,2-disubstituierten 3-Hydroxyaldehyde, wie beispielsweise 2,2-Dimethyl-3-hydroxypropanal, 2-Hydroxymethyl-2-methyl-butanal, 2-Hydroxymethyl-2-ethyl-butanal, 2-Hydroxymethyl-2-methyl-pentanal, 2-Hydroxymethyl-2-ethyl-hexanal, 1-Hydroxymethyl-cyclopentancarboxaldehyd, 1-Hydroxymethyl-cyclohexancarboxaldehyd 1-Hydroxymethyl-cyclohex-3-encarboxaldehyd, 2-Hydroxymethyl-2-methyl-3-phenyl-propanal, 3-Hydroxy-2-methyl-2-phenyl-propanal und 3-Hydroxy-2,2-diphenyl-propanal, mit geeigneten Carbonsäuren dar.

Beispiele für geeignete Carbonsäuren sind zum einen aliphatische Carbonsäuren mit mindestens 12 C-Atomen, wie Laurinsäure, Tridecansäure, Myristinsäure, Pentadecansäure, Palmitinsäure, Margarinsäure, Stearinsäure, Nonadecansäure, Arachinsäure, Palmitoleinsäure, Ölsäure, Erucasäure, Linolsäure, Linolensäure, Elaeostearinsäure, Arachidonsäure, Fettsäuren aus der technischen Verseifung von natürlichen Ölen und Fetten wie beispielsweise Rapsöl, Sonnenblumenöl, Leinöl, Ölbaumöl, Kokosnussöl, Ölpalmkernöl und Ölpalmöl, sowie technische Gemische von Fettsäuren, welche solche Säuren enthalten. Als Carbonsäuren geeignet sind zum anderen aromatische Carbonsäuren, beispielsweise Benzoesäure oder die stellungsisomeren Tolylsäuren, Ethyl- oder Isopropyl- oder tert.-Butyl- oder Methoxy- oder Nitrobenzoesäuren.

Bevorzugte Aldehyde der Formel (V) sind 2,2-Dimethyl-3-lauroyloxy-propanal, 2,2-Dimethyl-3-myristoyloxypropanal 2,2-Dimethyl-3-palmitoyloxy-propanal, 2,2-Dimethyl-3-stearoyloxy-propanal und 2,2-Dimethyl-3-benzoyloxy-propanal, sowie analoge Ester anderer 2,2-disubstituierter 3-Hydroxyaldehyde.

In einer besonders bevorzugten Ausführungsform steht R⁴ für einen Rest der Formel (II), wobei R⁵ ausgewählt ist aus der Gruppe bestehend aus Phenyl und den C₁₁-, C₁₃-, C₁₅- und C₁₇-Alkylgruppen.

Besonders bevorzugt ist 2,2-Dimethyl-3-lauroyloxypropanal.

In einer bevorzugten Herstellmethode eines Aldehyds der Formel (V) wird ein 2,2-disubstituierter 3-Hydroxyaldehyd, beispielsweise 2,2-Dimethyl-3-hydroxypropanal, welcher beispielsweise aus Formaldehyd (oder Paraformaldehyd) und Isobutyraldehyd, gegebenenfalls in situ, hergestellt werden kann, mit einer Carbonsäure zum entsprechenden Ester umgesetzt. Diese Veresterung kann ohne die Verwendung von Lösemitteln nach bekannten Methoden erfolgen, beschrieben beispielsweise in Houben-Weyl, "Methoden der organischen Chemie", Vol. VIII, Seiten 516 - 528.

Es ist auch möglich, Aldehyde der Formel (V) herzustellen, indem zur Veresterung eines 2,2-disubstituierten 3-Hydroxyaldehyds eine aliphatische oder cycloaliphatische Dicarbonsäure, wie beispielsweise Bernsteinsäure, Adipinsäure oder Sebacinsäure, verwendet wird. Auf diese Weise werden entsprechende aliphatische oder cycloaliphatische Dialdehyde erhalten.

Als Polyaldimin **ALD** können auch Mischungen verschiedener Polyaldimine verwendet werden, insbesondere auch Mischungen verschiedener Polyaldimine aus verschiedenen Polyaminen der Formel (III) und verschiedenen oder gleichen Aldehyden der Formel (IV) oder (V). Es kann durchaus vorteilhaft sein, Mischungen von Polyaldiminen **ALD** aus Mischungen von Polyaminen der Formel (III) mit unterschiedlichen Werten von n einzusetzen.

Die Polyaldimine **ALD** haben die Eigenschaft, dass sie keine tautomeren Enamine bilden können, da sie in α-Stellung zum C-Atom der Iminogruppe keinen Wasserstoff als Substituenten enthalten. Solche Aldimine bilden zusammen mit Polyurethanpolymeren **P** lagerfähige Gemische, auch wenn hochreaktive aromatische Isocyanatgruppen wie diejenigen von TDI und MDI darin vorhanden sind.

Des Weiteren haben die Polyaldimine **ALD** die Eigenschaft, dass sie geruchsfrei sind, und dass auch der bei ihrer Herstellung verwendete Aldehyd der Formel (IV) oder (V) geruchsfrei ist.

Unter einer "geruchsfreien" Substanz wird eine Substanz verstanden, die so geruchsarm ist, dass sie für die meisten menschlichen Individuen nicht riechbar, das heisst mit der Nase nicht wahrnehmbar, ist.

Bei der Aushärtung der Zusammensetzung wird der zur Herstellung des Polyaldimins **ALD** verwendete Aldehyd, das heisst ein Aldehyd der Formel (IV) oder (V), freigesetzt. Aufgrund der Geruchsfreiheit der Polyaldimine **ALD** und dieser Aldehyde ist es möglich, geruchsfrei aushärtende Zusammensetzungen zu erhalten.

Die Menge des Polyaldimins **ALD** in der feuchtigkeitshärtenden Zusammensetzung beträgt mindestens 22 Gewichts-%, bevorzugt mindestens 25 Gewichts-%, besonders bevorzugt mindestens 30 Gewichts-%, bezogen auf die Summe der Isocyanatgruppen-haltigen Bestandteile der Zusammensetzung. Dabei sollte darauf geachtet werden, dass das Polyaldimin in einer stöchiometrischen oder unterstöchiometrischen Menge, bezogen auf die freien Isocyanatgruppen der Zusammensetzung, vorhanden ist, insbesondere in einer Menge von 0.3 bis 1.0, bevorzugt 0.4 bis 0.9, besonders bevorzugt 0.4 bis 0.8, Equivalent Aldimingruppen pro Equivalent Isocyanatgruppen.

Die bei Raumtemperatur in der Regel flüssigen Polyaldimine **ALD** verdünnen das Polyurethanpolymer **P** überraschend gut. Der relativ hohe Gehalt an Polyaldimin **ALD** in der Zusammensetzung führt deshalb zu Beschichtungen mit guten Verarbeitungseigenschaften, insbesondere einer hohen Fliessfähigkeit.

Die feuchtigkeitshärtende Zusammensetzung kann neben dem Polyurethanpolymer P und dem Polyaldimin **ALD** ein oligomeres Polyisocyanat **OP** enthalten.

Als oligomeres Polyisocyanat **OP** geeignet sind sowohl aliphatische oligomere Polyisocyanate als auch aromatische oligomere Polyisocyanate sowie aliphatisch-aromatische Mischformen, wobei die aliphatischen oligomeren Polyisocyanate bevorzugt sind. Geeignete aliphatische oligomere Polyisocyanate **OP** leiten sich beispielsweise von folgenden Diisocyanaten ab:

1,6-Hexamethylendiisocyanat (HDI), 2-Methylpentamethylen-1,5-diisocyanat, 2,2,4- und 2,4,4-Trimethyl-1,6-hexamethylendiisocyanat (TMDI), 1,12-Dodecamethylendiisocyanat, Cyclohexan-1,3- und -1,4-diisocyanat und beliebige Gemische dieser Isomeren, 1-Isocyanato-3,3,5-trimethyl-5-isocyanatomethyl-cyclohexan (=Isophorondüsocyanat oder IPDI), Perhydro-2,4'- und - 4,4'-diphenylmethandiisocyanat (HMDI), 1,4-Diisocyanato-2,2,6-trimethylcyclohexan (TMCDI), m- und p-Xylylendiisocyanat (XDI), 1,3- und 1,4-Tetramethylxylylendiisocyanat (TMXDI), 1,3- und 1,4-Bis-(isocyanatomethyl)-cyclohexan, bevorzugt HDI und IPDI.

Geeignete aromatische oligomere Polyisocyanate **OP** sind abgeleitet von denselben aromatischen Diisocyanaten, wie sie bereits zur Herstellung eines Polyurethanpolymers **P** erwähnt wurden.

Technische Formen dieser Oligomeren stellen üblicherweise Gemische von Substanzen mit unterschiedlichen Oligomerisationsgraden und chemischen Strukturen dar. Geeignet sind technische Oligomerengemische, die eine mittlere NCO-Funktionalität von vorzugsweise 2.4 bis 4.0 aufweisen und insbesondere Isocyanurat-, Iminooxadiazindion-, Uretdion- oder Biuretgruppen enthalten. Zusätzlich können auch Allophanat-, Carbodiimid-, Uretonimin- oder Oxadiazintrion-Gruppen enthalten sein.

Geeignete kommerziell erhältliche technische Oligomerengemische von aliphatischen Diisocyanaten sind HDI-Biurete, beispielsweise als Desmodur^{®} N 100 und N 3200 (Bayer), Tolonate^{®} HDB und HDB-LV (Rhodia) und Duranate^{®} 24A-100 (Asahi Kasei); HDI-Isocyanurate, beispielsweise als Desmodur^{®} N 3300, N 3600 und N 3790 BA (alle von Bayer), Tolonate^{®} HDT, HDT-LV und HDT-LV2 (Rhodia), Duranate^{®} TPA-100 und THA-100 (Asahi Kasei) und Coronate^{®} HX (Nippon Polyurethane); HDI-Uretdione, beispielsweise als Desmodur^{®} N 3400 (Bayer); HDI-Iminooxadiazindione, beispielsweise als Desmodur^{®} XP 2410 (Bayer); HDI-Allophanate, beispielsweise als Desmodur^{®} VP LS 2102 (Bayer); sowie IPDI-Isocyanurate, beispielsweise in Lösung als Desmodur^{®} Z 4470 (Bayer) oder in fester Form als Vestanat^{®} T1890/100 (Degussa).

Bevorzugt sind die Trimere von HDI und/oder IPDI, insbesondere die Isocyanurate.

Ein technisches Oligomerengemisch von aromatischen Diisocyanaten ist TDI-Isocyanurat, beispielsweise erhältlich als Desmodur® IL (Bayer).

Ebenfalls kommerziell erhältlich sind gemischte aromatisch-aliphatische Isocyanurate auf Basis TDI / HDI, zum Beispiel als Desmodur® HL (Bayer).

Üblicherweise ist das oligomere Polyisocyanat OP in einer Menge von 0 - 20 Gewichts-%, bevorzugt in einer Menge von 0.5 - 20 Gewichts-%, besonders bevorzugt in einer Menge von 1.0 - 15 Gewichts-%, bezogen auf die gesamte Zusammensetzung, vorhanden.

Der Zusatz des oligomeren Polyisocyanates OP ist vorteilhaft, da dieses einerseits die Viskosität der Zusammensetzung weiter reduziert und andererseits aufgrund seines hohen Gehalts an Isocyanatgruppen und seiner relativ hohen mittleren NCO-Funktionalität die Härte der ausgehärteten Zusammensetzung erhöht.

Vorteilhaft enthält die feuchtigkeitshärtende Zusammensetzung kein oder bis höchstens 5 Gewichts-% eines Lösemittels **L** bezogen auf die gesamte Zusammensetzung.

Als Lösemittel **L** geeignet sind beispielsweise Ketone wie Aceton, Methylethylketon, Diisobutylketon, Acetylaceton, Mesityloxid, Cyclohexanon und Methylcyclohexanon; Ester, beispielsweise Acetate wie Ethylacetat, Propylacetat und Butylacetat, Formiate, Propionate und Malonate wie Diethylmalonat; Ether wie Dialkylether Ketonether und Esterether, beispielsweise Diisopropylether, Diethylether, Dibutylether, Diethylenglykoldiethylether und Ethylenglykoldiethylether; aliphatische und aromatische Kohlenwasserstoffe wie Toluol, Xylol, Heptan, Octan und Erdölfraktionen wie Naphtha, White Spirit, Petrolether und Benzin; halogenierte Kohlenwasserstoffe wie Methylenchlorid; sowie N-alkylierte Lactame wie beispielsweise N-Methylpyrrolidon.

Bevorzugt sind Xylol, Toluol, White Spirit und Erdölfraktionen im Siedebereich von 100 °C bis 200 °C.

Die Zusammensetzung ist als selbstverlaufende Bodenbeschichtung aufgrund der verdünnenden Wirkung der Polyaldimine **ALD** und der tiefen Viskosität des Polyurethanpolymers **P** auch ohne Lösemittel **L** in der Regel gut verarbeitbar. Um die Verarbeitbarkeit noch zu verbessern, kann es aber vorteihaft sein, geringe Mengen von bis zu 5 Gewichts-% der erwähnten Lösemittel **L** zuzugeben.

Vorteilhaft enthält die Zusammensetzung mindestens einen Füllstoff **F.** Der Füllstoff **F** beeinflusst sowohl die rheologischen Eigenschaften der nicht ausgehärteten Zusammensetzung als auch die mechanischen Eigenschaften und die Oberflächenbeschaffenheit der ausgehärteten Zusammensetzung. Geeignete Füllstoffe **F** sind anorganische und organische Füllstoffe, zum Beispiel natürliche, gemahlene oder gefällte Calciumcarbonate, welche gegebenenfalls mit Fettsäuren, insbesondere Stearaten, beschichtet sind, Baryt (BaSO₄, auch Schwerspat genannt), calcinierte Kaoline, Aluminiumoxide, Aluminiumhydroxide, Kieselsäuren, insbesondere hochdisperse Kieselsäuren aus Pyrolyseprozessen, Russe, insbesondere industriell hergestellte Russe (im Folgenden als "Russ" bezeichnet), PVC-Pulver oder Hohlkugeln. Bevorzugte Füllstoffe sind Baryt und Calciumcarbonate, sowie flammhemmende Füllstoffe wie Hydrate oder Hydroxide, insbesondere des Aluminiums, bevorzugt Aluminiumhydroxid.

Eine geeignete Menge Füllstoff **F** liegt beispielsweise im Bereich von 10 bis 70 Gewichts-%, bevorzugt 20 bis 60 Gewichts-%, bezogen auf die gesamte Zusammensetzung.

Es ist durchaus möglich und kann sogar von Vorteil sein, eine Mischung verschiedener Füllstoffe F einzusetzen.

Vorteilhaft enthält die Zusammensetzung mindestens einen Katalysator **K,** welcher die Hydrolyse der Aldimingruppen und / oder die Reaktion der Isocyanatgruppen beschleunigt.

Katalysatoren **K,** welche die Hydrolyse des Polyaldimins **ALD** beschleunigen, sind beispielsweise organische Carbonsäuren, wie Benzoesäure und Salicylsäure, organische Carbonsäureanhydride, wie Phthalsäureanhydrid, Hexahydrophthalsäureanhydrid und Hexahydromethylphthalsäureanhydrid, Silylester organischer Carbonsäuren, organische Sulfonsäuren wie p-Toluolsulfonsäure und 4-Dodecylbenzolsulfonsäure, Sulfonsäureester, andere organische oder anorganische Säuren, oder Mischungen der vorgenannten Säuren und Säureester.

Katalysatoren **K,** welche die Reaktion der Isocyanatgruppen mit Wasser beschleunigen, sind beispielsweise Organozinnverbindungen wie Dibutylzinndilaurat, Dibutylzinndichlorid, Dibutylzinndiacetylacetonat, Bismutorganische Verbindungen oder Bismut-Komplexe, oder tertiäre Aminogruppen enthaltende Verbindungen wie beispielsweise 2,2'-Dimorpholinodiethylether oder 1,4-Diazabicyclo[2.2.2]octan, oder andere, in der Polyurethanchemie übliche, Katalysatoren für die Reaktion der Isocyanatgruppen.

Es kann vorteilhaft sein, wenn in der Zusammensetzung eine Mischung aus mehreren Katalysatoren **K** vorhanden ist, insbesondere ein Gemisch aus einer sauren Verbindung und einer metallorganischen Verbindung oder einem Metallkomplex, aus einer sauren Verbindung und einer tertiäre Aminogruppen enthaltenden Verbindung, oder ein Gemisch aus einer sauren Verbindung, einer metallorganischen Verbindung oder einem Metallkomplex, und einer tertiäre Aminogruppen enthaltenden Verbindung.

Ein typischer Gehalt an Katalysator K beträgt üblicherweise 0.005 bis 2 Gewichts-%, bezogen auf die gesamte Zusammensetzung, wobei dem Fachmann klar ist, welche Einsatzmengen für welche Katalysatoren sinnvoll sind.

In der Zusammensetzung können als weitere Komponenten unter anderem die folgenden Hilfs- und Zusatzmittel vorhanden sein:
- Weichmacher, beispielsweise Ester organischer Carbonsäuren oder deren Anhydride, zum Beispiel Phthalate wie Dioctylphthalat und Diisodecylphthalat, Adipate wie Dioctyladipat, Azelate und Sebacate; organische Phosphor- und Sulfonsäureester und Polybutene;
- Fasern, beispielsweise aus Polyethylen;
- Pigmente, beispielsweise Titandioxid, Eisenoxide oder Chromverbindungen;
- weitere in der Polyurethanchemie übliche Katalysatoren;
- Reaktivverdünner und Vernetzer, beispielsweise Polyisocyanate wie MDI, PMDI, TDI, HDI, 1,12-Dodecamethylendiisocyanat, Cyclohexan-1,3- oder 1,4-diisocyanat, IPDI, Perhydro-2,4'- und -4,4'-diphenylmethandiisocyanat, 1,3- und 1,4-Tetramethylxylylendiisocyanat, Oligo- und Polymere dieser Polyisocyanate, Addukte von Polyisocyanaten mit kurzkettigen Polyolen, sowie Adipinsäure-dihydrazid und andere Dihydrazide;
- weitere latente Härter wie beispielsweise andere Aldimine oder Oxazolidine;
- Trocknungsmittel, wie beispielsweise p-Tosylisocyanat, Orthoameisensäureester, Calciumoxid, Vinyltrimethoxysilan und andere schnell hydrolysierende Silane, wie beispielsweise Organoalkoxysilane, welche in α-Stellung zur Silangruppe eine funktionelle Gruppe aufweisen, und Molekularsiebe;
- Haftvermittler, insbesondere Organoalkoxysilane, im Folgenden "Silane" genannt, wie beispielsweise Epoxysilane, Vinylsilane, (Meth)acrylsilane, Isocyanatosilane, Carbamatosilane, S-(Alkylcarbonyl)-mercaptosilane und Aldiminosilane, sowie oligomere Formen dieser Silane;
- Stabilisatoren gegen Wärme, Licht- und UV-Strahlung;
- flammhemmende Substanzen;
- oberflächenaktive Substanzen wie beispielsweise Netzmittel, Verlaufsmittel, Entlüftungsmittel oder Entschäumer;
- Biozide, wie beispielsweise Algizide, Fungizide oder das Pilzwachstum hemmende Substanzen;
sowie weitere, üblicherweise in einkomponentigen Polyurethanzusammensetzungen eingesetzte Substanzen.

Es ist vorteilhaft, darauf zu achten, dass sowohl das Polyaldimin **ALD,** als auch ein gegebenenfalls vorhandenes Lösemittel **L,** ein gegebenenfalls vorhandener Füllstoff **F,** ein gegebenenfalls vorhandener Katalysator **K,** sowie alle weiteren in der Zusammensetzung enthaltenen Komponenten die Lagerstabilität nicht beeinträchtigen. Das heisst, dass sie während der Lagerung die zur Vernetzung führenden Reaktionen wie Hydrolyse der Aldimingruppen oder Vernetzung der Isocyanatgruppen nicht in signifikantem Ausmass auslösen dürfen. Insbesondere bedeutet dies, dass all diese Komponenten kein oder höchstens Spuren von Wasser enthalten sollten. Es kann sinnvoll sein, gewisse Komponenten vor dem Einmischen in die Zusammensetzung chemisch oder physikalisch zu trocknen.

Die Zusammensetzung wird unter Ausschluss von Feuchtigkeit hergestellt und aufbewahrt. Sie ist lagerstabil, d.h. sie kann unter Ausschluss von Feuchtigkeit in einer geeigneten Verpackung oder Anordnung, wie beispielsweise einem Fass, einem Eimer oder einem Beutel, über einen Zeitraum von mehreren Monaten bis zu einem Jahr und länger aufbewahrt werden, ohne dass sie sich in ihren Anwendungseigenschaften oder in ihren Eigenschaften nach der Aushärtung in einem für ihren Gebrauch relevanten Ausmass verändert. Üblicherweise wird die Lagerstabilität über die Messung der Viskosität ermittelt.

Bevorzugt enthält die Zusammensetzung weitere Hilfs- und Zusatzstoffe, insbesondere Pigmente, Verlaufsmittel, Entschäumer, Stabilisatoren und Trocknungsmittel.

Die Aldimingruppen des Polyaldimins **ALD** haben die Eigenschaft, bei Kontakt mit Feuchtigkeit zu hydrolysieren. Die in der Zusammensetzung vorhandenen Isocyanatgruppen reagieren formal mit dem frei werdenden Polyamin der Formel (III), wobei die entsprechenden Aldehyde der Formel (IV) oder (V) freigesetzt werden. Im Verhältnis zu den Aldimingruppen überschüssige Isocyanatgruppen reagieren mit dem vorhandenen Wasser. Als Ergebnis dieser Reaktionen härtet die Zusammensetzung schliesslich aus; dieser Prozess wird auch als Vernetzung bezeichnet. Die Reaktion der Isocyanatgruppen mit dem hydrolysierenden Polyaldimin **ALD** muss dabei nicht notwendigerweise über das Polyamin erfolgen. Selbstverständlich sind auch Reaktionen mit Zwischenstufen der Hydrolyse des Polyaldimins **ALD** zum Polyamin möglich. Beispielsweise ist es denkbar, dass das hydrolysierende Polyaldimin **ALD** in der Form eines Halbaminals direkt mit den Isocyanatgruppen reagiert.

Das für die Aushärtungsreaktion benötigte Wasser kann entweder aus der Luft stammen (Luftfeuchtigkeit), oder aber die Zusammensetzung kann mit einer Wasser enthaltenden Komponente in Kontakt gebracht werden, zum Beispiel durch Besprühen, oder es kann der Zusammensetzung bei der Applikation eine Wasser enthaltende Komponente zugesetzt werden.

Die Zusammensetzung härtet bei Kontakt mit Feuchtigkeit aus. Die Aushärtungsgeschwindigkeit lässt sich über die Art und Menge der Katalysatoren **K** steuern.

Die bei der Aushärtung freigewordenen Aldehyde der Formel (IV) oder (V) sind schwerflüchtig und verbleiben in der ausgehärteten Zusammensetzung, ohne deren Gebrauchseigenschaften negativ zu beeinflussen.

Die Zusammensetzung weist eine flüssige Konsistenz mit guten Verlaufseigenschaften auf. Dadurch lässt sie sich einfach als selbstverlaufende Beschichtung auf überwiegend ebene Flächen applizieren, beispielsweise als Bodenbelag. Die Applikation der Zusammensetzung kann in mehreren Schichten erfolgen. Pro Schicht wird üblicherweise eine Schichtdicke von 0.5 bis 3 mm, insbesondere 0.5 bis 2 mm, appliziert.

Im ausgehärteten Zustand verfügt die Zusammensetzung über elastische Eigenschaften und eine vergleichsweise hohen Härte. Typischerweise weist die ausgehärtete Zusammensetzung eine Bruchdehnung im Bereich von 30 bis 700 %, eine Zugfestigkeit im Bereich von 3 bis 10 N/mm² und eine Shore A-Härte im Bereich von 45 bis 90 auf.

Die Zusammensetzung weist eine gute Alterungsbeständigkeit auf, auch unter Einfluss von Wärme, Feuchtigkeit und UV-Licht. Bei der Verwendung von ausschliesslich aliphatischen Isocyanatgruppen in der Zusammensetzung werden Beschichtungen erhalten, welche sich unter Lichteinwirkung nicht verfärben.

Bei einem Bodenbelag handelt es sich häufig um einen Aufbau in mehreren sich unterscheidenden Schichten. Ein typischer Aufbau kann beispielsweise mit einer sogenannten Grundierung beginnen, welche die Aufgabe hat, den Untergrund für die elastische Polyurethanbeschichtung vorzubereiten. Anschliessend wird beispielsweise die beschriebene Zusammensetzung als elastische Schicht aufgetragen, wobei dieser Auftrag je nach Beschaffenheit des Untergrundes und gewünschter Schichtdicke in einem oder mehreren Arbeitsgängen erfolgen kann. Schliesslich kann anschliessend eine sogenannte Versiegelung aufgetragen werden, welche in einer dünnen Schicht, beispielsweise in einer Dicke von einigen Mikrometern bis einigen Zehntelmillimetern, die Oberflächenbeschaffenheit des Bodenbelages nochmals beeinflusst. Dabei kann es sich um eine transparente oder um eine pigmentierte Versiegelung handeln. Es ist auch möglich, dass auf eine ausgehärtete Schicht einer erfindungsgemässen Zusammensetzung, welche eine hohe Bruchdehnung aufweist, zusätzlich eine sogenannte Verschleissschicht aufgetragen wird. Auf diese Weise entsteht ein Belag mit guter dynamischer Rissüberbrückung und hoher Oberflächenhärte, wobei die erfindungsgemässe Zusammensetzung mit ihrer hohen Elastizität die Rissüberbrückung gewährleistet, und die Verschleissschicht die hohe Oberflächenhärte gewährt. Die Verschleissschicht ihrerseits kann je nach Bedarf noch versiegelt werden. Auf diese Weise können Boden-Aufbauten gemäss OS 11 nach der "Richtlinie für Schutz und Instandsetzung von Betonbauteilen" des Deutschen Ausschusses für Stahlbeton erhalten werden, wobei "OS" für "Oberflächenschutzsystem" steht.

Es ist auch möglich, dass die beschriebene Zusammensetzung vor der Applikation mit einem weiteren Füllstoff, insbesondere Quarzsand, vermischt wird. Ebenso ist es möglich, nur die Oberfläche der noch flüssigen Zusammensetzung mit Quarzsand zu bestreuen beziehungsweise bzw. einzustreuen. Auf beide Arten wird eine sandige, gut rutschfeste, abrasionsbeständige Oberfläche erhalten, welche je nach Bedarf versiegelt werden kann.

Sollen abschüssige Flächen mit der beschriebenen Zusammensetzung beschichtet werden, so ist es möglich, in die Zusammensetzung vor der Applikation ein sogenanntes Stellmittel in Form eines die Zusammensetzung verdickenden Füllstoffes einzumischen, beispielsweise in Form von Polyethylenfasern.

Der Auftrag der beschriebenen Zusammensetzung erfolgt typischerweise durch Aufgiessen auf den zu beschichtenden Untergrund und wird im flüssigen Zustand mit Hilfe beispielsweise eines Rakels oder einer Zahntraufel gleichmässig verteilt. Zusätzlich kann das Material mit einer Stachelwalze egalisiert und entlüftet werden. Es ist aber auch eine maschinelle Applikation, beispielsweise in Form einer Spritzapplikation, möglich.

Ein geeigneter Untergrund, auf welchen die Zusammensetzung typischerweise appliziert wird, ist beispielsweise Beton, Zement, Asphalt, Stahl, Holz, Keramik oder ein Kunststoff, wobei der Untergrund durch Reinigen, Bürsten oder Sandstrahlen vorbehandelt sein kann, und/oder eine Grundierung aufweisen kann. Als Grundierungen in Frage kommen beispielsweise Haftvermittlerlösungen oder Primer.

Die beschriebene Zusammensetzung ist speziell geeignet als Beschichtung oder Belag, insbesondere im Innen- oder Aussenbereich eines Gebäudes oder eines Bauwerks, beispielsweise als Bodenbelag für Innenräume wie Büros, Industriehallen, Turnhallen oder Kühlräume oder im Aussenbereich für Balkone, Terrassen, Brücken, Parkdecks oder Sport- und Spielplätze.

### Beispiele

### Beschreibung der Prüfmethoden

Die **Viskosität** wurde auf einem thermostatisierten Kegel-Platten-Viskosimeter Physica UM (Kegeldurchmesser 20 mm, Kegelwinkel 1°, Kegelspitze-Platten-Abstand 0.05 mm, Schergeschwindigkeit 10 bis 1000 S⁻¹) gemessen.

Die **Shore A-Härte** wurde bestimmt nach DIN 53505.

Die **Zugfestigkeit** und die **Bruchdehnung** wurden bestimmt nach DIN 53504 (Zuggeschwindigkeit: 200 mm/min) an während 14 Tagen im Normklima (23±1 °C, 50±5% relative Luftfeuchtigkeit) ausgehärteten Filmen mit einer Schichtdicke von 1.1 mm.

### Verwendete Rohstoffe

- Desmophen^{®} 1111 BD: Bayer; Polyoxypropylendiol mit einer OH-Zahl von 111.4 mg KOH/g und einem Wassergehalt von 0.02 Gew.-%.
- Desmophen^{®} 2061 BD: Bayer; Polyoxypropylendiol mit einer OH-Zahl von 56.1 mg KOH/g und einem Wassergehalt von 0.02 Gew.-%.
- Vestanat^{®} IPDI: Degussa; Isophorondiisocyanat (IPDI), NCO-Equivalentgewicht = 111.1 g/Eq
- Desmodur^{®} XP 2599: Bayer; Polyether-Polyurethanprepolymer auf Basis HDI mit 6.0 Gew.% NCO und einer Viskosität von ca. 3 Pa.s
- Desmodur^{®} N 3600: Bayer; Isocyanurat aus Hexamethylendiisocyanat (HDI), enthält 23 Gew.-% NCO
- Desmodur^{®} Z 4470: Bayer; 70 Gew.-% Isocyanurat aus Isophorondiisocyanat (IPDI) in Solvesso 100, enthält 11.9 Gew.% NCO

### a) Herstellung des Polyurethanpolymers P1

Unter Feuchtigkeitsausschluss wurden 1060 g Desmophen^{®} 1111 BD, 650 g Desmophen^{®} 2061 BD, 770 g Vestanat^{®} IPDI und 0.25 g Dibutylzinndilaurat bei 80 °C gerührt, bis der Isocyanatgehalt der Mischung einen konstanten Wert von 6.7 Gew.-% aufwies. Das erhaltene Polymer wurde auf Raumtemperatur abgekühlt und unter Ausschluss von Feuchtigkeit aufbewahrt. Es hatte eine Viskosität von 11.6 Pa·s bei 20 °C.

### b) Herstellung des Polyaldimins ALD1

In einem Rundkolben wurden unter Stickstoffatmosphäre 298.7 g (1.05 mol) 2,2-Dimethyl-3-lauroyloxy-propanal vorgelegt. Unter kräftigem Rühren wurden aus einem beheizten Eintropftrichter langsam 58.1 g (0.50 mol) 1,6-Hexamethylendiamin zugegeben. Danach wurden bei 80 °C die flüchtigen Bestandteile im Vakuum vollständig abdestilliert. Es wurden 338.2 g gelbliches, bei Raumtemperatur flüssiges Reaktionsprodukt erhalten mit einem Aldimin-Gehalt, bestimmt als Amin-Gehalt, von 2.95 mmol NH₂/g und einer Viskosität von 78 mPa·s bei 20 °C.

### c) Herstellung von ungefüllten Zusammensetzungen

### Beispiel 1

30 Gewichtsteile Desmodur^{®} XP 2599 (Viskosität 3.7 Pa·s bei 20 °C) und 1.5 Gewichtsteile Desmodur^{®} N 3600 wurden miteinander vermischt. Die Viskosität dieser Mischung betrug 3.6 Pa·s bei 20 °C.

Anschliessend wurden 12 Gewichtsteile des Polyaldimins *ALD1* homogen eingemischt. Die Viskosität dieser Mischung betrug 1.26 Pa·s bei 20 °C.

### Beispiel 2

24.85 Gewichtsteile des Polyurethanpolymers *P1* und 8 Gewichtsteile Desmodur^{®} Z 4470 wurden miteinander vermischt. Die Viskosität dieser Mischung betrug 7.5 Pa·s bei 20 °C.

Anschliessend wurden 12 Gewichtsteile des Polyaldimins *ALD1* homogen eingemischt. Die Viskosität dieser Mischung betrug 1.66 Pa·s bei 20 °C.

Die Beispiele 1 und 2 zeigen die gute verdünnende Wirkung eines Polyaldimins der Formel (I) in einer Mischung mit jeweils einem Polyurethanpolymer **P** und einem oligomeren Polyisocyanat **OP.**

### d) Herstellung von gefüllten Zusammensetzungen, Anwendung als Beschichtung

### Beispiel 3

Die Zusammensetzung des Beispiels 3 eignet sich als einkomponentige, geruchsfrei aushärtende, VOC-freie und vergilbungsbeständige Beschichtung, beispielsweise als elastischer Bodenbelag im Innenbereich.

In einem Vakuum-Mischer wurden 300 g Desmodur^{®} XP 2599, 15 g Desmodur^{®} N 3600, 5 g p-Toluol-sulfonylisocyanat, 500.4 g getrocknetes Baryt (natürliches Bariumsulfat), 4 g Tego^{®} Foamex N (Tego Chemie), 1.6 g Benzoesäure, 4 g Byk^{®} A 555 (Byk Chemie), 40 g Titandioxid, 10 g Tinuvin^{®} 292 (Ciba) und 120 g Polyaldimin *ALD1* zu einer homogenen, fliessfähigen Masse verarbeitet, welche unter Ausschluss von Feuchtigkeit aufbewahrt wurde.

Die Zusammensetzung hatte eine Viskosität von 3 Pa·s bei 20 °C.

Die Zusammensetzung wurde in einer Schichtdicke von 1.1 mm auf einen planen PTFE-Untergrund ausgegossen und bei 23 °C und 50% relativer Luftfeuchtigkeit belassen. 24 Stunden nach der Applikation war eine klebefreie, elastische Beschichtung entstanden, welche nach 7 Tagen 23°C und 50% relativer Luftfeuchtigkeit ausgehärtet
eine Shore A-Härte von 80,
eine Zugfestigkeit von 5.8 N/mm² und
eine Bruchdehnung von 50% aufwies.

### Beispiel 4

Die Zusammensetzung des Beispiels 4 eignet sich als einkomponentige, VOC-arme und vergilbungsbeständige Beschichtung auf Polyurethanbasis, beispielsweise als elastischer Bodenbelag im Aussenbereich mit rissüberbrückenden Eigenschaften, zum Beispiel als Balkon-Beschichtung.

In einem Vakuum-Mischer wurden 250 g Polyurethanpolymer *P1,* 80 g Desmodur^{®} Z 4470, 10 g Xylol, 479g getrocknetes Baryt (natürliches Bariumsulfat), 4 g Tego^{®} Foamex N (Tego Chemie), 1.6 g Benzoesäure, 4 g Byk^{®} A 555 (Byk Chemie), 40 g Titandioxid, 10 g Tinuvin^{®} 292 (Ciba), 1.4 g Dibutylzinndilaurat und 120 g Polyaldimin *ALD1* zu einer homogenen, fliessfähigen Masse verarbeitet, welche unter Ausschluss von Feuchtigkeit aufbewahrt wurde.

Die Zusammensetzung hatte eine Viskosität von 4.5 Pa·s bei 20 °C.

Die Zusammensetzung wurde in einer Schichtdicke von 1.1 mm auf einen planen PTFE-Untergrund ausgegossen und bei 23 °C und 50% relativer Luftfeuchtigkeit belassen. 24 Stunden nach der Applikation war eine klebefreie, elastische Beschichtung entstanden, welche nach 7 Tagen 23°C und 50% relativer Luftfeuchtigkeit ausgehärtet
eine Shore A-Härte von 65,
eine Zugfestigkeit von 4.5 N/mm² und
eine Bruchdehnung von 390% aufwies.

## Patentansprüche

1. Feuchtigkeitshärtende Zusammensetzung enthaltend
a) mindestens ein Isocyanatgruppen aufweisendes Polyurethanpolymer P
b) mindestens ein Polyaldimin **ALD** der Formel (I) 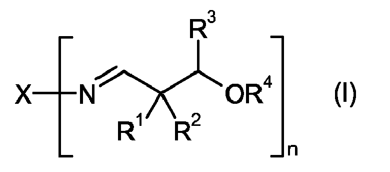
c) gegebenenfalls ein oligomeres Polyisocyanat **OP**
wobei X für den organischen Rest eines n-funktionellen Polyamins mit einem Molekulargewicht von höchstens 300 g/mol nach Entfernung aller NH₂-Gruppen steht und dieser organische Rest keine Gruppierungen aufweist, die in Abwesenheit von Wasser mit Isocyanatgruppen reaktionsfähig sind, insbesondere keine Hydroxylgruppen, keine sekundären Aminogruppen, keine Harnstoffgruppen und keine anderen Gruppen mit aktivem Wasserstoff;
n für 2 oder 3 oder 4 steht;
R¹ und R² unabhängig voneinander entweder jeweils für einen einwertigen Kohlenwasserstoffrest mit 1 bis 12 C-Atomen stehen
oder zusammen für einen zweiwertigen Kohlenwasserstoffrest mit 4 bis 20 C-Atomen, der Teil eines, gegebenenfalls substituierten, carbocyclischen Rings mit 5 bis 8, bevorzugt 6, C-Atomen, ist, stehen;
R³ für ein Wasserstoffatom oder für eine Alkyl- oder Arylalkylgruppe steht; und R⁴
entweder für einen, gegebenenfalls Heteroatome enthaltenden, Kohlenwasserstoffrest mit 11 bis 30 C-Atomen steht, oder für einen Rest der Formel (II) steht, 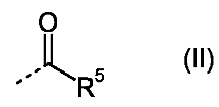 wobei R⁵ entweder für einen linearen oder verzweigten Alkylrest mit 11 bis 30 C-Atomen, gegebenenfalls mit cyclischen Anteilen und gegebenenfalls mit mindestens einem Heteroatom, insbesondere Sauerstoff in Form von Ether-, Ester- oder Aldehyd-Gruppen, steht,
oder für einen einfach oder mehrfach ungesättigten linearen oder verzweigten Kohlenwasserstoffrest mit 11 bis 30 C-Atomen steht,
oder für einen, gegebenenfalls substituierten, aromatischen oder heteroaromatischen 5- oder 6-gliedrigen Ring steht;
und wobei der Anteil des Polyaldimins ALD der Formel (1) mindestens 22 Gewichts-%, bezogen auf die Summe der Isocyanatgruppen-haltigen Bestandteile der Zusammensetzung, beträgt.

2. Feuchtigkeitshärtende Zusammensetzung gemäss Anspruch 1, **dadurch gekennzeichnet, dass** n = 2 oder 3, insbesondere n = 2, ist.

3. Feuchtigkeitshärtende Zusammensetzung gemäss Anspruch 1 oder 2, **dadurch gekennzeichnet, dass** X für eines der Amine ausgewählt aus der Gruppe bestehend aus Hexamethylendiamin, 5-Diamino-2-methylpentan (MPMD), 1,3-Diaminopentan (DAMP), 1-Amino-3-aminomethyl-3,5,5-trimethylcyclohexan (= Isophorondiamin oder IPDA), 4-Aminomethyl-1,8-octandiamin, 1,3-Xylylendiamin, 1,3-Bis-(aminomethyl)cyclohexan, Bis-(4-aminocyclohexyl)-methan, Bis-(4-amino-3-methylcyclohexyl)-methan, 3(4),8(9)-Bis-(aminomethyl)-tricyclo[5.2.1.0^{2,6}]decan, 1,4-Diamino-2,2,6-trimethylcyclohexan, Polyoxyalkylen-Polyamine mit theoretisch zwei oder drei Aminogruppen sowie Mischungen von zwei oder mehr der vorgenannten Polyamine nach Entfernung aller NH₂-Gruppen steht.

4. Feuchtigkeitshärtende Zusammensetzung gemäss Anspruch 1 oder 2, **dadurch gekennzeichnet, dass** X für 1,6-Hexamethylendiamin nach Entfernung beider NH₂-Gruppen steht.

5. Feuchtigkeitshärtende Zusammensetzung gemäss einem der vorhergehenden Ansprüche, **dadurch gekennzeichnet, dass** R¹ und R² jeweils für eine Methylgruppe stehen.

6. Feuchtigkeitshärtende Zusammensetzung gemäss einem der vorhergehenden Ansprüche, **dadurch gekennzeichnet, dass** R³ für ein Wasserstoffatom steht.

7. Feuchtigkeitshärtende Zusammensetzung gemäss einem der vorhergehenden Ansprüche, **dadurch gekennzeichnet, dass** R⁴ für einen Rest der Formel (II) steht, wobei R⁵ ausgewählt ist aus der Gruppe bestehend aus Phenyl und den C₁₁-, C₁₃-, C₁₅- und C₁₇-Alkylgruppen.

8. Feuchtigkeitshärtende Zusammensetzung gemäss einem der vorhergehenden Ansprüche, **dadurch gekennzeichnet, dass** der Anteil des Isocyanatgruppen aufweisenden Polyurethanpolymers **P** 10-80 Gewichts-%, bezogen auf die gesamte Zusammensetzung, beträgt.

9. Feuchtigkeitshärtende Zusammensetzung gemäss einem der vorhergehenden Ansprüche, **dadurch gekennzeichnet, dass** das Isocyanatgruppen aufweisende Polyurethanpolymer **P** aus einem Polyol und einem aliphatischen Polyisocyanat, insbesondere 1,6-Hexamethylendiisocyanat (HDI) oder Isophorondiisocyanat (IPDI), hergestellt wird.

10. Feuchtigkeitshärtende Zusammensetzung gemäss einem der vorhergehenden Ansprüche, **dadurch gekennzeichnet, dass** der Anteil des Polyaldimins **ALD** der Formel (1) mindestens 25 Gewichts-%, insbesondere mindestens 30 Gewichts-%, bezogen auf die Summe der Isocyanatgruppen-haltigen Bestandteile der Zusammensetzung, beträgt.

11. Feuchtigkeitshärtende Zusammensetzung gemäss einem der vorhergehenden Ansprüche, **dadurch gekennzeichnet, dass** der Anteil des oligomeren Polyisocyanates OP mindestens 0 - 20 Gewichts-%, insbesondere 0.5 - 20 Gewichts-%, bevorzugt 1.0 - 15 Gewichts-%, bezogen auf die gesamte Zusammensetzung, beträgt.

12. Feuchtigkeitshärtende Zusammensetzung gemäss einem der vorhergehenden Ansprüche, **dadurch gekennzeichnet, dass** das oligomere Polyisocyanat OP ein aliphatisches oligomeres Polyisocyanat ist.

13. Feuchtigkeitshärtende Zusammensetzung gemäss einem der vorhergehenden Ansprüche, **dadurch gekennzeichnet, dass** die Zusammensetzung kein Lösemittel enthält.

14. Feuchtigkeitshärtende Zusammensetzung gemäss einem der Ansprüche 1 bis 12, **dadurch gekennzeichnet, dass** die Zusammensetzung bis 5 Gewichts-% eines Lösemittels, bezogen auf die gesamte Zusammensetzung, enthält.

15. Feuchtigkeitshärtende Zusammensetzung gemäss Anspruch 14, **dadurch gekennzeichnet, dass** das Lösemittel ausgewählt ist aus der Gruppe bestehend aus Xylol, Toluol, White Spirit und Erdölfraktionen im Siedebereich von 100 °C bis 200 °C.

16. Feuchtigkeitshärtende Zusammensetzung gemäss einem der vorhergehenden Ansprüche, **dadurch gekennzeichnet, dass** die Zusammensetzung mindestens einen Füllstoff, insbesondere im Bereich von 10 bis 70 Gewichts-%, bevorzugt 20 bis 60 Gewichts-%, bezogen auf die gesamte Zusammensetzung, enthält.

17. Feuchtigkeitshärtende Zusammensetzung gemäss Anspruch 16, **dadurch gekennzeichnet, dass** der Füllstoff Bariumsulfat (Baryt) oder ein Calciumcarbonat ist.

18. Feuchtigkeitshärtende Zusammensetzung gemäss Anspruch 16, **dadurch gekennzeichnet, dass** der Füllstoff ein flammhemmender Füllstoff, insbesondere ein Hydroxid oder ein Hydrat, bevorzugt des Aluminiums, mehr bevorzugt Aluminiumhydroxid, ist.

19. Feuchtigkeitshärtende Zusammensetzung gemäss einem der vorhergehenden Ansprüche, **dadurch gekennzeichnet, dass** die Zusammensetzung bei Raumtemperatur selbstverlaufend ist.

20. Ausgehärtete Zusammensetzung erhalten aus der Reaktion von Wasser, insbesondere in der Form von Luftfeuchtigkeit, mit einer feuchtigkeitshärtenden Zusammensetzung gemäss einem der Ansprüche 1 bis 19.

21. Verwendung einer feuchtigkeitshärtenden Zusammensetzung gemäss einem der Ansprüche 1 bis 19 zur Herstellung eines Belages oder einer Beschichtung.

22. Verwendung gemäss Anspruch 21 im Innen- oder Aussenbereich eines Gebäudes oder eines Bauwerks.

23. Verfahren zur Herstellung einer Beschichtung, insbesondere eines Bodenbelages, umfassend mindestens
i) einen Schritt des Applizierens einer feuchtigkeitshärtenden Zusammensetzung gemäss einem der Ansprüche 1 bis 19 auf einen Untergrund; und
ii) einen Schritt des Aushärtens der applizierten feuchtigkeitshärtenden Zusammensetzung mittels Wasser, insbesondere in der Form von Luftfeuchtigkeit.

24. Verfahren gemäss Anspruch 23, **dadurch gekennzeichnet, dass** der Untergrund Beton, Zement, Asphalt, Stahl, Holz, Keramik oder ein Kunststoff ist.

25. Verfahren gemäss Anspruch 23 oder 24, **dadurch gekennzeichnet, dass** der Untergrund eine Grundierung aufweist.

26. Verfahren gemäss einem der Ansprüche 23 bis 25, **dadurch gekennzeichnet, dass** der Schritt i) des Applizierens einer feuchtigkeitshärtenden Zusammensetzung mehrere Male nacheinander erfolgt.

27. Verfahren gemäss einem der Ansprüche 23 bis 26, **dadurch gekennzeichnet, dass** es zusätzlich einen Schritt des Aufbringens einer Versiegelung umfasst, welcher nach dem letzten Schritt des Applizierens der Zusammensetzung erfolgt.

28. Verfahren gemäss einem der Ansprüche 23 bis 27, **dadurch gekennzeichnet, dass** es zusätzlich einen Schritt des Einstreuens von körnigem Füllstoff, insbesondere von Quarzsand, umfasst, welcher nach dem letzten Schritt des Applizierens der feuchtigkeitshärtenden Zusammensetzung und vor dem vollständigen Aushärten der Zusammensetzung erfolgt.

29. Belag oder Beschichtung, welche nach einem Verfahren gemäss einem der Ansprüche 23 bis 28 erhalten wird.

30. Gebäude oder Bauwerk, welches einen Belag oder eine Beschichtung gemäss Anspruch 29 aufweist.

31. Verwendung des Polyaldimins **ALD** der Formel (I), wie es in einem der Ansprüche 1 bis 19 beschrieben ist, als Verdünner für Isocyanatgruppen aufweisende Polyurethanpolymere.

32. Verwendung des Polyaldimins **ALD** der Formel (1), wie es in einem der Ansprüche 1 bis 19 beschrieben ist, als Lösemittelersatz in Zusammensetzungen, welche Isocyanatgruppen aufweisende Polyurethanpolymere enthalten.
